# EUROPEAN PATENT APPLICATION

(11) **EP 3 312 840 A1**
(43) Date of publication of application: **25.04.2018**
(21) Application number: 17196880.3
(22) Date of filing: 17.10.2017
(51) Int. Cl.: G11B 27/10, H04N 21/47, G11B 27/34, G06F 3/048

(54) **ELECTRONIC DEVICE AND METHOD FOR PLAYING MULTIMEDIA CONTENT BY ELECTRONIC DEVICE**

(30) Priority: 18.10.2016 KR 20160135243
(71) Applicant: Samsung Electronics Co., Ltd., Gyeonggi-do 16677 (KR)
(72) Inventor: Lee, Hwa-Jun, 16677 Suwon-si (KR)
(74) Representative: Nederlandsch Octrooibureau

(57) **Abstract**

An electronic device for playing multimedia content, and a method thereof are provided. The method may include a storing playback information about content through each of a plurality of applications, displaying a list including a plurality of objects associated with the playback information about the content through each of the plurality of applications, and upon receiving an input for selecting a first object from among the plurality of objects, playing a first content item of a first application corresponding to the first object based on playback information associated with the first object.

## Description

### TECHNICAL FIELD

The present disclosure relates to electronic devices and methods for playing multimedia content by electronic devices.

### background

An electronic device may play multimedia content (or simply 'content') through various applications. Multimedia content may include video or audio content in various data types, e.g., text, voice, or image.

An electronic device may temporarily stop playing multimedia content upon sensing a designated input. The electronic device may re-execute the application to resume the playback of the multimedia content.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure as to address at least the above-mentioned problems and/or disadvantages and to provide at least the advantages described below. Accordingly, an aspect of the present disclosure is to provide an electronic device for playing multimedia content, and a method thereof.

After playing part of particular multimedia content, the user may play the rest by executing the application.

Upon resuming the playback of multimedia content through each of various applications of the electronic device, the user may have difficulty in figuring out where the playback of the multimedia content has paused in the playback time.

In accordance with an aspect of the present disclosure, an electronic device and a method for playing multimedia content are provided. The electronic device includes an identify playback information about multiple content items that have been played on the electronic device during a predetermined time segment within the full playback time of content and provide a list of the content items that have paused based ion the playback information.

In accordance with another aspect of the present disclosure, an electronic device is provided. The electronic device includes a display device, at least one processor electrically connected to the display device, and a memory electrically connected to the at least one processor, and configured to store playback information about content through each of a plurality of applications, wherein the memory may stores instructions executed to enable the at least one processor to display, through the display device, a list including a plurality of objects associated with the playback information about the content through each of the plurality of applications, and upon receiving an input for selecting a first object from among the plurality of objects, play a first content item of a first application corresponding to the first object based on playback information associated with the first object.

In accordance with another aspect of the present disclosure, a method for playing multimedia content by an electronic device is provided. The method includes a storing playback information about content through each of a plurality of applications, displaying a list including a plurality of objects associated with the playback information about the content through each of the plurality of applications, and upon receiving an input for selecting a first object from among the plurality of objects, playing a first content item of a first application corresponding to the first object based on playback information associated with the first object.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating an example of a configuration of an electronic device according to an embodiment of the present disclosure;
FIG. 2 is a flowchart illustrating an example of the operation of playing multimedia content according to an embodiment of the present disclosure;
FIG. 3 is a flowchart illustrating an example of the operation of controlling an application to play multimedia content according to an embodiment of the present disclosure;
FIG. 4 is a view illustrating an example of a home screen configuration displaying a content list according to an embodiment of the present disclosure;
FIG. 5 is a view illustrating an example of a home screen configuration displaying a content list according to an embodiment of the present disclosure;
FIG. 6 is a view illustrating an example of a notification panel configuration displaying a content list according to an embodiment of the present disclosure;
FIG. 7 is a view illustrating an example of a notification panel configuration displaying a content list according to an embodiment of the present disclosure;
FIG. 8 is a view illustrating an example of a lock screen configuration displaying a content list according to an embodiment of the present disclosure;
FIG. 9 is a view illustrating an example of an application to provide a content list and an example of an execution screen of the application according to an embodiment of the present disclosure;
FIG. 10 is a view illustrating an example of an application folder to provide a content list and an example of an execution screen of content according to an embodiment of the present disclosure;
FIG. 11 is a view illustrating an example network environment according to an embodiment of the present disclosure;
FIG. 12 is a block diagram illustrating an example of a configuration of an electronic device according to an embodiment of the present disclosure; and
FIG. 13 is a block diagram illustrating an example of a program module configuration according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural references unless the context clearly dictates otherwise. Thus, for example, reference to "a component surface" includes reference to one or more of such surfaces.

As used herein, the terms "A or B" or "at least one of A and/or B" may include all possible combinations of A and B. As used herein, the terms "first" and "second" may modify various components regardless of importance and/or order and are used to distinguish a component from another without limiting the components. It will be understood that when an element (e.g., a first element) is referred to as being (operatively or communicatively) "coupled with/to," or "connected with/to" another element (e.g., a second element), it can be coupled or connected with/to the other element directly or via a third element.

As used herein, the terms "configured to" may be interchangeably used with other terms, such as "suitable for," "capable of," "modified to," "made to," "adapted to," "able to," or "designed to" in hardware or software in the context. Rather, the term "configured to" may mean that a device can perform an operation together with another device or parts. For example, the term "processor configured (or set) to perform A, B, and C" may mean a generic-purpose processor (e.g., a central processing unit (CPU) or application processor (AP) that may perform the operations by executing one or more software programs stored in a memory device or a dedicated processor (e.g., an embedded processor) for performing the operations.

For example, examples of the electronic device according to embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a MP3 player, a medical device, a camera, or a wearable device. The wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad or tattoo), or a body implantable device. In some embodiments, examples of the smart home appliance may include at least one of a television, a digital video disk (DVD) player, an audio player, a refrigerator, an air conditioner, a cleaner, an oven, a microwave oven, a washer, a drier, an air cleaner, a set-top box, a home automation control panel, a security control panel, a television (TV) box (e.g., Samsung HomeSync™ , Apple TV™, or Google TV™) , a gaming console (Xbox™, PlayStation™), an electronic dictionary, an electronic key, a camcorder, or an electronic picture frame.

According to an embodiment of the present disclosure, the electronic device may include at least one of various medical devices (e.g., diverse portable medical measuring devices (a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, drones, automatic teller's machines (ATMs), point of sales (POS) devices, or internet of things (IoT) devices (e.g., a bulb, various sensors, a sprinkler, a fire alarm, a thermostat, a street light, a toaster, fitness equipment, a hot water tank, a heater, or a boiler). According to various embodiments of the disclosure, examples of the electronic device may at least one of part of a piece of furniture, building/structure or vehicle, an electronic board, an electronic signature receiving device, a projector, or various measurement devices (e.g., devices for measuring water, electricity, gas, or electromagnetic waves). According to embodiments of the present disclosure, the electronic device may be flexible or may be a combination of the above-enumerated electronic devices.

According to an embodiment of the present disclosure, the electronic device is not limited to the above-listed embodiments. As used herein, the term "user" may denote a human or another device (e.g., an artificial intelligent electronic device) using the electronic device.

According to an embodiment of the present disclosure, "(temporarily) stop playing content (or content item)" or "content (or content item) pauses" may mean that the data output of the content is stopped at a particular position between the start and end of the playback of the content. For example, the electronic device may perform control to stop the content playing as a predesignated button is chosen and a preset input is received or as a particular display object is selected.

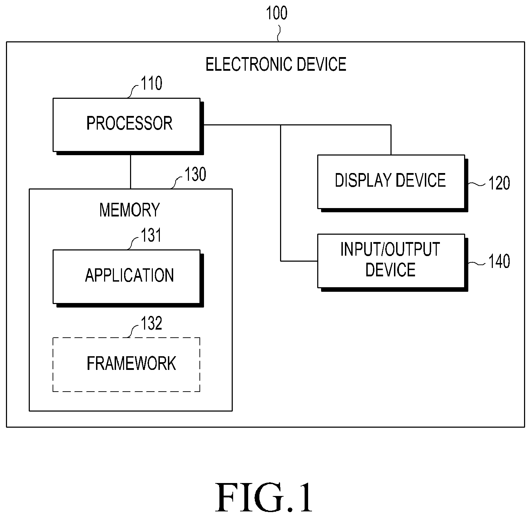

FIG. 1 is a block diagram illustrating an example of a configuration of an electronic device according to an embodiment of the present disclosure.

Referring to FIG. 1, an electronic device 100 may include a processor 110 (e.g., at least one processor), a display device 120 (e.g., a display), a memory 130 (e.g., a storage), and an input/output device 140.

The processor 110 may control the overall operation of the electronic device 100. For example, the processor 110 may identify multimedia content that is played through an application and generate a list of multimedia content items that has stopped playing at a particular position in the playback time of the multimedia content.

According to an embodiment of the present disclosure, the application of the electronic device 100 may include an application for playing multimedia content, such as video or music, or a web browser application or social network service (SNS) application capable of playing multimedia content based on a uniform resource locator (URL). For example, the user may run the multimedia content playing application through the core drill apparatus for installation in an excavator to enjoy multimedia content stored in the electronic device 100, or the user may run the SNS application to enjoy multimedia content that has been generated or uploaded by another user.

According to an embodiment of the present disclosure, the processor 110 may identify multimedia content that is played through each of a plurality of applications and may identify the multimedia content that has stopped playing among the multimedia content items identified. For example, the multimedia content that has stopped playing may include content identified to have stopped playing overall at a particular position as a predesignated input is sensed.

According to an embodiment of the present disclosure, the processor 110 may identify content playback information about the multimedia content that has stopped playing and generate a content list. For example, the processor 110 may generate a list of content items that have stopped playing separately for content or application. The content list may include content identification information, the time that the playback has stopped, and a progress bar to indicate the status of the playback relative to the full length of content. In the case of identifying a plurality of content items that have stopped playing through a particular application, the content list may further include a button to display a list of the plurality of content items.

According to an embodiment of the present disclosure, the processor 110 may set conditions for, e.g., the communication status of the electronic device 100, communication data consumption for playing content, the number of times of executing the application, the last time played back, or the amount of data necessary for playing content and may determine the number or order of content items displayed in the content list.

According to an embodiment of the present disclosure, the processor 110 may give a higher priority to content that is played by receiving data based on wireless communication (e.g., wireless fidelity (Wi-Fi) or mobile hot spot) using an access point (AP) than to content that is played using cellular data, and the processor 110 may place the higher-priority content in an upper end of the list.

According to an embodiment of the present disclosure, the processor 110 may include, in the content list based on the number of times that applications installed have run, only content items that are included in the application frequently executed a predetermined number of times or more among a plurality of content items that have stopped playing.

According to an embodiment of the present disclosure, when the number of content items that have paused at a particular position in the playback time of content exceeds a predetermined number, the processor 110 may identify the last time played back and include a predetermined number of content items that have played latest in the content list.

The display device 120 may include a touchscreen (not shown). For example, the display device 120 may output an execution screen of an application, image data of multimedia content, or a list of multimedia content items that have stopped playing. The display device 120 may receive a touch input to select a particular content item from the content list through the touchscreen.

The memory 130 may include an application (or application program) 131 or a framework 132.

According to an embodiment of the present disclosure, the memory 130 may store content playback information about the multimedia content that has stopped playing. For example, the content playback information may include, e.g., content identification information, information about the application that has played a particular content item, information about an activity in the application, information about the positions where the playback started and (temporarily) stopped in the overall playback time, information about the time when the playback initiated, information about a ratio of the length of content to the playback time, or the number of times of playback, or other various pieces of information related to the playback of content.

According to an embodiment of the present disclosure, the activity may indicate a screen (or an application screen which is viewed when the application is executed) with a user interface. For example, the application 131 may provide (or include) one or more activities. For example, a message application may provide (or include) an activity for looking up a list of messages received or sent and an activity for looking up the details of a message.

The application 131 may include an application to play multimedia content, such as video or audio, or a web browser application or SNS application to play content based on URL.

The framework 132 may identify information (e.g., a codec) to process the content playback information. For example, the framework 132 may process a command to convert playback information of a plurality of content items stored in the memory 130 or received from an external electronic device into data processable by the electronic device 100.

According to an embodiment of the present disclosure, upon identifying an input for playing content, the framework 132 may perform control to resume the playback from the position where the playback has paused before based on the playback information (or intent data) of the content. For example, when no application is installed on the electronic device 100 to play a particular content item, the content may be played through a web browser application based on the URL information of the content.

According to an embodiment of the present disclosure, although the framework 132 is shown to be included in the memory 130, the processor 110 may be configured to convert the playback information of content into data processable by various devices and to control the playback of content in which case part of the framework 132 may be transformed to be included in the processor 110 or may be omitted.

The input/output device 140 may include a speaker (not shown) or various sensors. For example, the voice data of multimedia content may be outputted through the input/output device 140, or data may be received through the input/output device 140 from the outside to control the playback of the multimedia content.

According to an embodiment of the present disclosure, multimedia content may stop or resume playing continuously from the position where the playback has paused based on data inputted through a sensor of the input/output device 140.

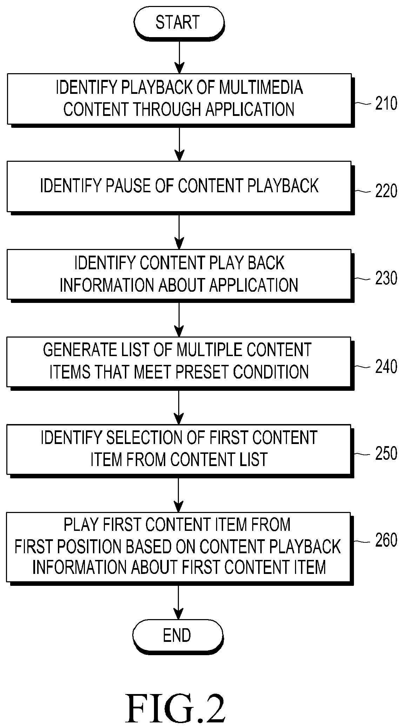

FIG. 2 is a flowchart illustrating an example of the operation of playing multimedia content according to an embodiment of the present disclosure. The operation may be performed by at least one of an electronic device (e.g., the electronic device 100), a processor (e.g., the processor 110 shown in FIG. 1) of the electronic device, or a controller of the electronic device.

Referring to FIG. 2, the electronic device may identify that multimedia content is playing through an application in operation 210.

In operation 220, the electronic device may identify that the multimedia content stops playing. For example, the electronic device may stop playing the multimedia content at a particular position within the entire play time when a pause-related event occurs at the particular position.

In operation 230, the electronic device may identify content playback information about the application. For example, the content playback information may include identification information about the application, identification information about the content that has stopped playing, and information about the start and end position of playback within the entire playback time.

According to an embodiment of the present disclosure, the electronic device may store the content playback information about the multimedia content that has paused per application or per content item.

In operation 240, the electronic device may generate a list of a plurality of multimedia content items that meet a preset condition. The content list may include content identification information, information about the time that the playback has stopped, and a progress bar to indicate the status of the playback relative to the length of the content or a button to display a list of the plurality of content items that have stopped playing through a particular application.

In operation 250, the electronic device may identify that a first content item is selected from the content list.

In operation 260, the electronic device may play the first content item from a first position based on the content playback information about the first content item. For example, the first position may be a position of the entire playback time of the first content item, where the playback of the content has stopped before.

According to an embodiment of the present disclosure, the electronic device may generate a list of content items that have stopped playing at a particular position of the playback time of content, and as the first content item is selected from the content list, the electronic device may perform control to play the first content item from the first position rather than from the beginning.

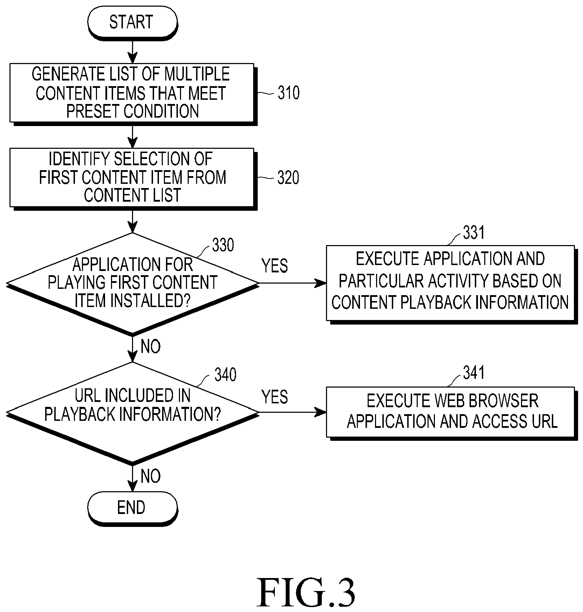

FIG. 3 is a flowchart illustrating an example of the operation of controlling an application to play multimedia content according to an embodiment of the present disclosure. The operation may be performed by at least one of an electronic device (e.g., the electronic device 100), a processor (e.g., the processor 110 shown in FIG. 1) of the electronic device, or a controller of the electronic device.

Referring to FIG. 3, the electronic device may generate a list of a plurality of multimedia content items that meet a preset condition in operation 310.

In operation 320, the electronic device may identify that a first content item is selected from the content list.

In operation 330, the electronic device may determine whether a first application for playing the first content item has been installed on the electronic device.

When it is determined in operation 330 that the first application has been installed on the electronic device, the electronic device may play the first content item from the first position in a first activity of the first application based on the content playback information about the first content item in operation 331. For example, the content playback information about the first content item may include information about the activity in which the first content item has played and information about the first position where the playback has stopped playing within the entire playback time of the first content item.

When it is determined in operation 330 that the first application has not been installed on the electronic device, the electronic device may identify whether the content playback information about the first content item includes URL information in operation 340. For example, the content playback information may further include at least part of application information, content identification information, activity information, playback start position information, playback stop position information, or information about the time played back.

When it is identified in operation 340 that the content playback information includes URL information, the electronic device may execute a web browser application to access the URL included in the content playback information and may play the first content item from the first position in operation 341.

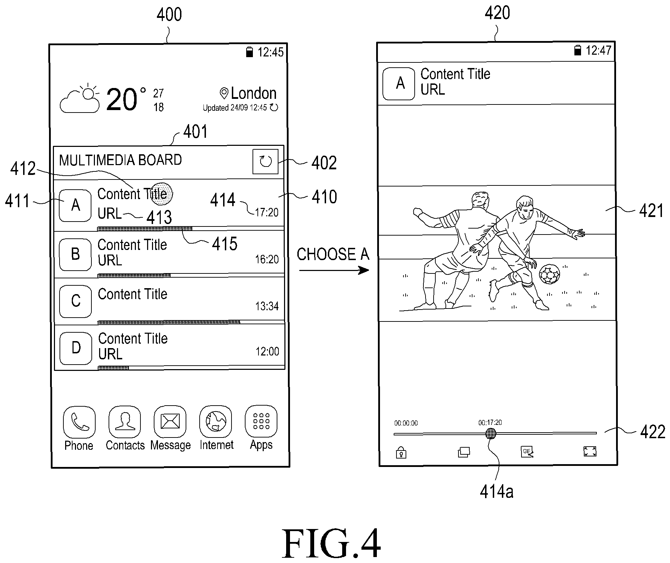

FIG. 4 is a view illustrating an example of a home screen configuration displaying a content list according to an embodiment of the present disclosure.

Referring to FIG. 4, a widget-type multimedia board 401 may be displayed on the home screen 400 of the electronic device. For example, the multimedia board 401 may include a list of multimedia content items (e.g., 410 and 420) that have stopped playing at a particular position in the playback time of content or that have stopped playing for a predetermined time before the current time. The multimedia board 401 may include a reset or reload icon 402 as shown in FIG. 4.

According to an embodiment of the present disclosure, the content list may include a renew button to update the content list with respect to the current time. The content list may display an icon 411, content title 412, URL information 413, the position (e.g., '17:20') 414 when the playback has stopped within the total playback time of content and a progress bar 415 to indicate the position where the playback stops for each content item (e.g., content A (410)).

According to an embodiment of the present disclosure, when content A is selected from the content list, the electronic device may switch the home screen into an execution screen 420 of content A. For example, the execution screen 420 may be an execution screen of a web browser application that is accessed based on the URL information 413 or an execution screen of the application that plays content A.

According to an embodiment of the present disclosure, the execution screen 420 of content A may display an area 421 where image data of content A is displayed and a progress bar 422 to indicate the status of playback of the content. For example, the progress bar 422 to indicate the playback status may include an indicator 414a to indicate the position of playback. The indicator 414a may be displayed corresponding to the position (e.g., '17:20') where the playback of content A has stopped.

According to an embodiment of the present disclosure, as content A is selected from the multimedia board 401 of the home screen 400, the electronic device may play content A from the prior position (e.g., '17:20') where the playback has stopped.

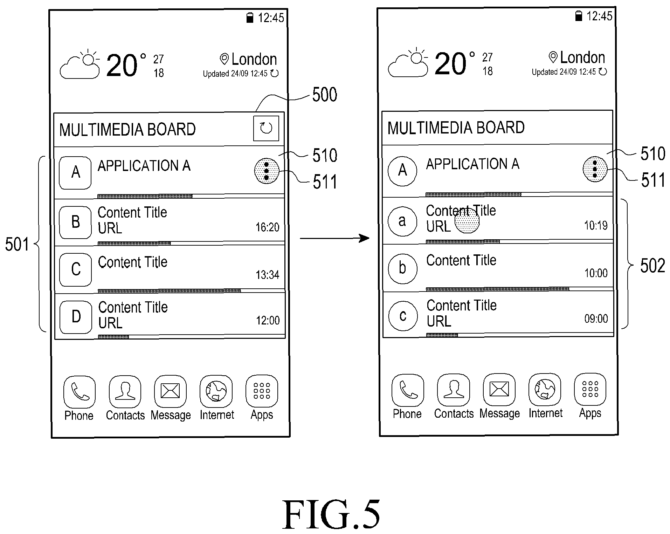

FIG. 5 is a view illustrating an example of a home screen configuration displaying a content list according to an embodiment of the present disclosure.

Referring to FIG. 5, a widget-type multimedia board 500 may be displayed on the home screen of the electronic device. For example, the multimedia board 500 may include a list 501 of objects of multimedia content items that have stopped playing at a particular position in the playback time of content or that have stopped playing for a predetermined time before the current time.

According to an embodiment of the present disclosure, when the number of content items executable by the same application (e.g., application A) among content items that have stopped playing at a particular position in the playback time of content exceeds a predetermined time, the electronic device may generate the content list 501 so that the content is displayed as one object 510. For example, the object 510 may include information about the application to execute the content and a button 511 to display the list 502 of content items that are executable by the application and that have stopped playing before.

According to an embodiment of the present disclosure, when the button 511 is selected, the multimedia board 500 may display the list 502 of content items that are executable by application A and that have stopped playing before. For example, when the button 511 is selected with the content list 502 displayed, the electronic device may perform control to display the list 501 that has been displayed on the multimedia board 500 before.

According to an embodiment of the present disclosure, the electronic device may display content items that have stopped playing before through the multimedia board 501 of the home screen 500.

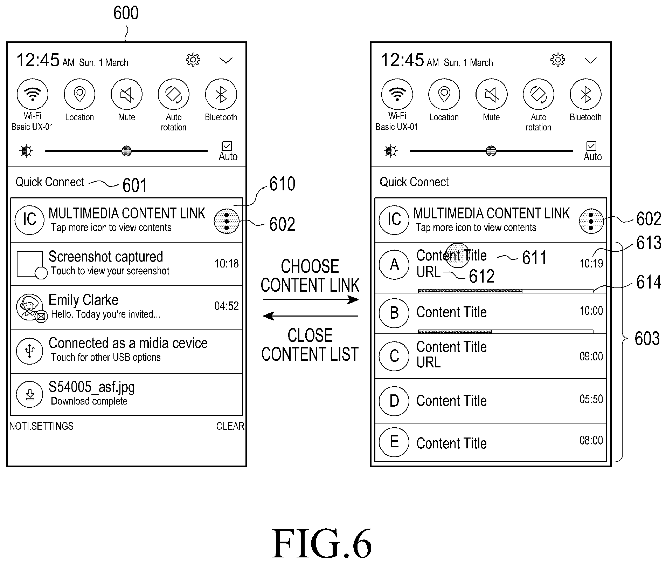

FIG. 6 is a view illustrating an example of a notification panel configuration displaying a content list according to an embodiment of the present disclosure.

Referring to FIG. 6, a notification panel 600 displayed through the electronic device may display a list of multimedia content items that have stopped playing at a particular position in the playback of content or have stopped playing for a predetermined time before the current time in a menu configuration for quick execution (e.g., 'quick connect') 601. For example, the notification panel 600 may include a multimedia content link 610 and a button 602 to display the content list as objects to display the content list.

According to an embodiment of the present disclosure, the multimedia content link, as a menu item to display the list of content items that have stopped playing at a particular position in the playback time of content in the electronic device, may be displayed in the form of an application or widget or as a component of the notification panel or lock screen, or the multimedia content link may be displayed in other various forms.

According to an embodiment of the present disclosure, when the button 602 is selected, the content list 603 may be displayed in the area where the object of the quick connect 601 is displayed. For example, when the button 602 is selected with the content list 603 displayed, the electronic device may perform control to close the content list 603 and to display the quick connect (601) menu back.

According to an embodiment of the present disclosure, the electronic device may include and display the name (content title) of a particular content (e.g., 'content A 611'), URL information 612 of content, a playback stop position 613, or a progress bar 614 to indicate the status of playback in the content list 603. For example, when content A 611 is selected from the content list 603, the electronic device may access the URL information 612 through the web browser application and play content A 611 from the prior position (e.g., '10:19') where the playback has stopped.

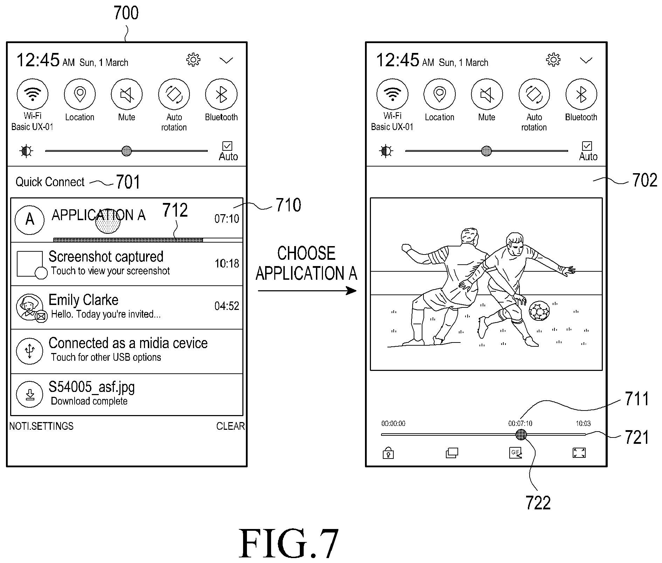

FIG. 7 is a view illustrating an example of a notification panel configuration displaying a content list according to an embodiment of the present disclosure.

Referring to FIG. 7, a notification panel 700 displayed through the electronic device may display an object 710 for multimedia content that has stopped playing latest in the menu configuration for quick connect 701. For example, the object 710 may include a title (e.g., 'application A'), a position (e.g., '07:10') 711 when the playback has stopped playing within the entire content, or a progress bar 712 to indicate the status of the playback of the content, as application information including the content that has stopped playing.

According to an embodiment of the present disclosure, when the object 710 for application A is selected from the content list, the electronic device may display an execution screen 702 of application A in the area of the quick connect 701. For example, the execution screen 702 of application A may display an area where image data of content that has stopped playing before is displayed and a progress bar 721 to indicate the status of playback of the content.

According to an embodiment of the present disclosure, the progress bar 721 to indicate the status of playback may include an indicator 722 to indicate the position of playback. The indicator 722 may be displayed corresponding to the position where the content used to be played through application A has stopped playing. For example, as the object 710 for application A is selected from the quick connect 701 of the notification panel 700, the electronic device may perform control to play the content from the position (e.g., '07:10') where the playback has stopped before, rather than from the beginning.

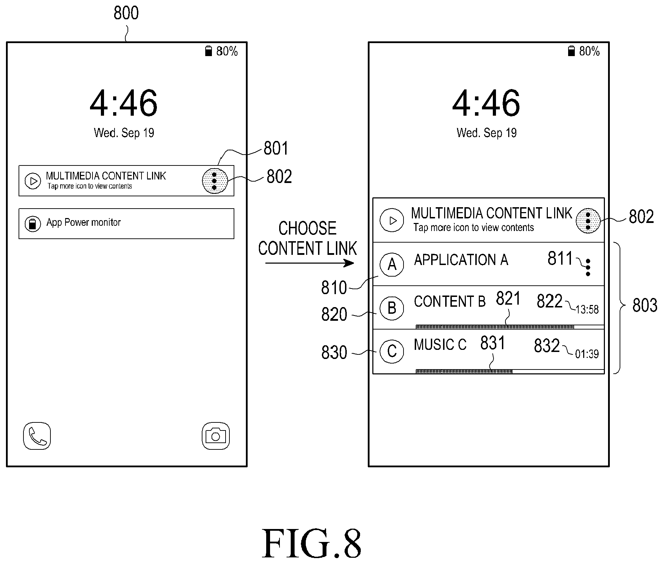

FIG. 8 is a view illustrating an example of a lock screen configuration displaying a content list according to an embodiment of the present disclosure.

Referring to FIG. 8, the lock screen 800 of the electronic device may display an object (e.g., a multimedia content link 801) for displaying a multimedia content list in the form of a widget. For example, the multimedia content link 801 may include a button 802 to display the multimedia content that has stopped playing at a particular position in the playback time of content.

According to an embodiment of the present disclosure, the electronic device may perform control so that the content list 803 is displayed through the lock screen 800 when the button 802 is selected and so that the content list 803 disappears as the button 802 is selected with the content list 803 displayed. For example, the content list 803 may include objects (e.g., 810, 820, or 830) for a plurality of content items (e.g., application A, content B, or music C) that have stopped playing before.

According to an embodiment of the present disclosure, the object 810 for application A may be displayed to include a button 811 for displaying a list of content items that have stopped playing at a particular position in the playback time of the content items being played through the application. The object 820 for content B may be displayed to include a progress bar 821 to display the status of playback of content B and information about the position (e.g., '13:58') 822 when the playback has stopped within the entire playback time of content B. The object 830 for music C may be displayed to include a progress bar 831 to display the status of playback of music C and information about the position (e.g., '01:39') 832 when the playback has stopped within the entire playback time of music C.

According to an embodiment of the present disclosure, upon sensing selection of any one object in the content list 803, the electronic device may perform control to play the content corresponding to the selected object from the position (e.g., 822 or 832) where the playback has stopped before.

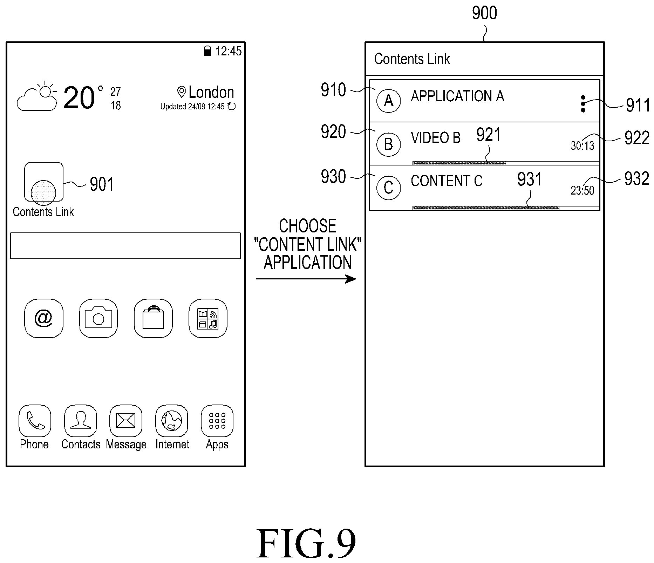

FIG. 9 is a view illustrating an example of an application to provide a content list and an example of an execution screen of the application according to an embodiment of the present disclosure.

Referring to FIG. 9, an icon 901 of an application to provide a content list may be displayed on the home screen of the electronic device. For example, when the icon 901 is selected, the home screen may switch to an execution screen 900 of the application.

According to an embodiment of the present disclosure, the execution screen 900 may display a content list including objects for a plurality of content items that have paused at a particular position in the playback time of content. For example, the content list may include an object 910 for application A, an object 920 for video B, or an object 930 for content C.

According to an embodiment of the present disclosure, the object 910 for application A may be displayed to include a button 911 for displaying a list of content items that have stopped playing at a particular position in the playback time of the content items being played through the application. The object 920 for video B may be displayed to include a progress bar 921 to display the segment of time played back within the entire playback time of video B and information about the position (e.g., '30:13') 922 when the playback has stopped within the entire playback time of video B. The object 930 for content C may be displayed to include a progress bar 931 to display the status of playback of content C and information about the position (e.g., '23:50') 932 when the playback has stopped within the entire playback time of content C.

According to an embodiment of the present disclosure, upon sensing selection of any one object in the content list, the electronic device may perform control to play the content corresponding to the selected object from the position (e.g., 922 or 932) where the playback has stopped before.

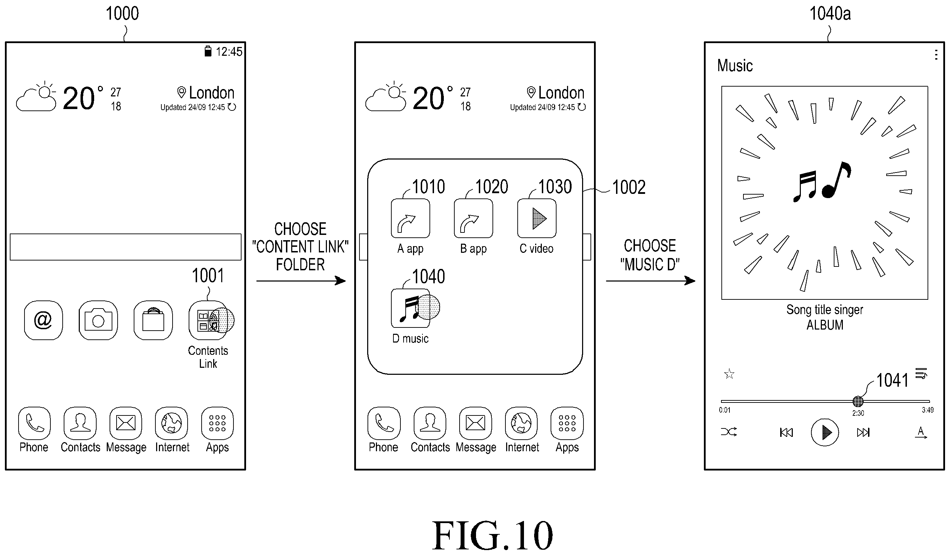

FIG. 10 is a view illustrating an example of an application folder to provide a content list and an example of an execution screen of content according to an embodiment of the present disclosure.

Referring to FIG. 10, the home screen 1000 of the electronic device may display a content link 1001 (e.g., a content link folder) that includes objects for a plurality of content items. For example, the objects may perform a shortcut function to immediately run a particular content and may be displayed as icons.

According to an embodiment of the present disclosure, when the folder 1001 is selected, the icons included in the folder 1001 may be displayed in a portion 1002 of the home screen 1001. For example, the icons may include an icon 1010 or 1020 for immediately playing a particular content through application A or B, an icon 1030 for immediately playing video C, or an icon 1040 for playing music d.

According to an embodiment of the present disclosure, when the icon 1040 for music D is selected from among the icons in the folder 1001, the electronic device may switch the home screen 1000 to an execution screen 1040a of the application for executing music D. For example, the execution screen 1040a may include information about music D (e.g., album title, album picture, song title, and singer) and a playback controller area.

According to an embodiment of the present disclosure, the playback controller area may include buttons to play music, a progress bar to indicate the status of playback, and an indicator 1041 to indicate the position of playback. For example, as the icon 1040 for music D is selected through the folder, the electronic device may perform control to continuously play music D from the position (e.g., '2:30') where the playback has stopped before and relocate the indicator 1041 to the position corresponding to '2:30' on the progress bar and display the indicator 1041.

According to an embodiment of the present disclosure, upon sensing selection any one icon (e.g., music D 1040) in the application folder (e.g., content link 1010) of the home screen 1000, the electronic device may perform control to play the content corresponding to the selected icon from the position (e.g., '2:30') where the playback has stopped before.

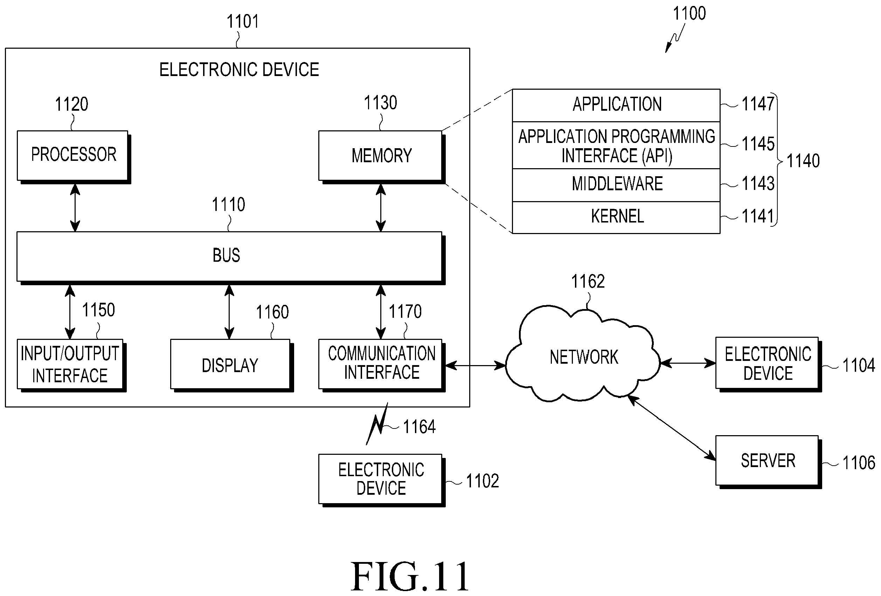

FIG. 11 is a view illustrating an example network environment according to an embodiment of the present disclosure.

Referring to FIG. 11, an electronic device 1101 is included in a network environment 1100, and the electronic device 1101 may include a bus 1110, a processor 1120 (e.g., at least one processor), a memory 1130 (e.g., a storage), an input/output interface 1150, a display 1160, and a communication interface 1170.

According to an embodiment of the present disclosure, the electronic device 1101 may exclude at least one of the components or may add another component. The bus 1110 may include a circuit for connecting the components 1110 to 1170 with one another and transferring communications (e.g., control messages or data) between the components. The processor 1120 may include one or more of a central processing unit (CPU), an application processor (AP), or a communication processor (CP). The processor 1120 may perform control on at least one of the other components of the electronic device 1101, and/or perform an operation or data processing relating to communication.

The memory 1130 may include a volatile and/or non-volatile memory. For example, the memory 1130 may store commands or data related to at least one other component of the electronic device 1101. According to an embodiment of the present disclosure, the memory 1130 may store software and/or a program 1140. The program 1140 may include, e.g., a kernel 1141, middleware 1143, an application programming interface (API) 1145, and/or an application program (or "application") 1147. At least a portion of the kernel 1141, middleware 1143, or API 1145 may be denoted an operating system (OS). For example, the kernel 1141 may control or manage system resources (e.g., the bus 1110, processor 1120, or a memory 1130) used to perform operations or functions implemented in other programs (e.g., the middleware 1143, API 1145, or application program 1147). The kernel 1141 may provide an interface that allows the middleware 1143, the API 1145, or the application 1147 to access the individual components of the electronic device 1101 to control or manage the system resources.

The middleware 1143 may function as a relay to allow the API 1145 or the application 1147 to communicate data with the kernel 1141, for example. Further, the middleware 1143 may process one or more task requests received from the application program 1147 in order of priority. For example, the middleware 1143 may assign a priority of using system resources (e.g., bus 1110, processor 1120, or memory 1130) of the electronic device 1101 to at least one of the application programs 1147 and process one or more task requests. The API 1145 is an interface allowing the application 1147 to control functions provided from the kernel 1141 or the middleware 1143. For example, the API 133 may include at least one interface or function (e.g., a command) for filing control, window control, image processing or text control. For example, the input/output interface 1150 may transfer commands or data input from the user or other external device to other component(s) of the electronic device 1101 or may output commands or data received from other component(s) of the electronic device 1101 to the user or other external devices.

The display 1160 may include, e.g., a liquid crystal display (LCD), a light emitting diode (LED) display, an organic light emitting diode (OLED) display, or a microelectromechanical systems (MEMS) display, or an electronic paper display. The display 1160 may display, e.g., various content items (e.g., text, images, videos, icons, or symbols) to the user. The display 1160 may include a touchscreen and may receive, e.g., a touch, gesture, proximity or hovering input using an electronic pen or a body portion of the user. For example, the communication interface 1170 may set up communication between the electronic device 1101 and an external electronic device (e.g., a first electronic device 1102, a second electronic device 1104, or a server 1106). For example, the communication interface 1170 may be connected with the network 1162 through wireless or wired communication to communicate with the external electronic device (e.g., the second external electronic device 1104 or server 1106).

The wireless communication may include cellular communication which uses at least one of, e.g., long term evolution (LTE), long term evolution-advanced (LTE-A), code division multiple access (CDMA), wideband code division multiple access (WCDMA), universal mobile telecommunication system (UMTS), wireless broadband (WiBro), or global system for mobile communication (GSM). According to an embodiment of the present disclosure, the wireless communication may include at least one of, e.g., Wi-Fi, bluetooth (BT), bluetooth low power (BLE), zigbee, near field communication (NFC), magnetic secure transmission (MST), radio frequency (RF), or body area network (BAN). According to an embodiment of the present disclosure, the wireless communication may include global navigation satellite system (GNSS). The GNSS may be, e.g., global positioning system (GPS), global navigation satellite system (Glonass), Beidou navigation satellite system (hereinafter, "Beidou") or Galileo, or the European global satellite-based navigation system. Hereinafter, the terms "GPS" and the "GNSS" may be interchangeably used herein. The wired connection may include at least one of, e.g., universal serial bus (USB), high definition multimedia interface (HDMI), recommended standard (RS)-232, power line communication (PLC), or plain old telephone service (POTS). The network 1162 may include at least one of telecommunication networks, e.g., a computer network (e.g., local area network (LAN) or wide area network (WAN)), internet, or a telephone network.

The first and second external electronic devices 1102 and 1104 each may be a device of the same or a different type from the electronic device 1101. According to an embodiment of the present disclosure, all or some of operations executed on the electronic device 1101 may be executed on another or multiple other electronic devices (e.g., the electronic devices 1102 and 1104 or server 1106). According to an embodiment of the present disclosure, when the electronic device 1101 should perform some function or service automatically or at a request, the electronic device 1101, instead of executing the function or service on its own or additionally, may request another device (e.g., electronic devices 1102 and 1104 or server 1106) to perform at least some functions associated therewith. The other electronic device (e.g., electronic devices 1102 and 1104 or server 1106) may execute the requested functions or additional functions and transfer a result of the execution to the electronic device 1101. The electronic device1101 may provide a requested function or service by processing the received result as it is or additionally. To that end, a cloud computing, distributed computing, or client-server computing technique may be used, for example.

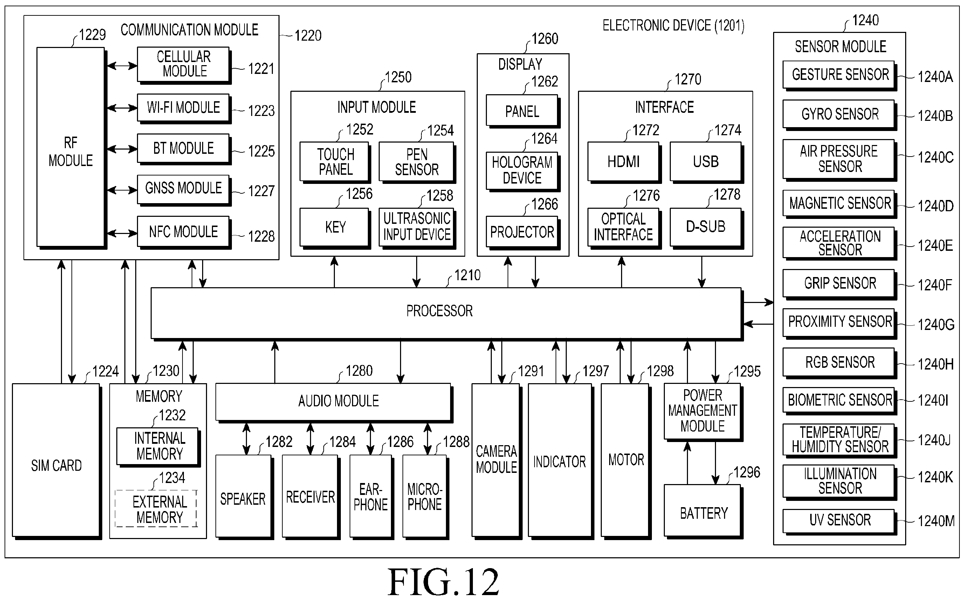

FIG. 12 is a block diagram illustrating an example of a configuration of an electronic device according to an embodiment of the present disclosure.

Referring to FIG. 12, an electronic device 1201 may include the whole or part of, e.g., the electronic device 1101 shown in FIG. 11.

Referring to FIG. 12, the electronic device 1201 may include one or more processors (e.g., application processors (APs)) 1210, a communication module 1220, a subscriber identification module (SIM) 1224, a memory 1230, a sensor module 1240, an input device 1250, a display 1260, an interface 1270, an audio module 1280, a camera module 1291, a power management module 1295, a battery 1296, an indicator 1297, and a motor 1298. The processor 1210 may control multiple hardware and software components connected to the processor 1210 by running, e.g., an operating system (OS) or application programs, and the processor 210 (e.g., at least one processor) may process and compute various data. The processor 1210 may be implemented in, e.g., a system on chip (SoC). According to an embodiment of the present disclosure, the processor 1210 may further include a graphic processing unit (GPU) and/or an image signal processor (ISP). The processor 1210 may include at least some (e.g., the cellular module 1221) of the components shown in Fig. 12. The processor 1210 may load a command or data received from at least one of other components (e.g., a non-volatile memory) on a volatile memory, process the command or data, and store resultant data in the non-volatile memory.

The communication module 1220 may have the same or similar configuration to the communication interface 1170. The communication module 1220 may include, e.g., a cellular module 1221, a Wi-Fi module 1223, a bluetooth (BT) module 1225, a GNSS module 1227, a NFC module 1228, and a RF module 1229. The cellular module 1221 may provide voice call, video call, text, or internet services through, e.g., a communication network. The cellular module 1221 may perform identification or authentication on the electronic device 1201 in the communication network using a subscriber identification module (SIM) 1224 (e.g., the SIM card). According to an embodiment of the present disclosure, the cellular module 1221 may perform at least some of the functions providable by the processor 1210. According to an embodiment of the present disclosure, the cellular module 1221 may include a communication processor (CP). According to an embodiment of the present disclosure, at least some (e.g., two or more) of the cellular module 1221, the Wi-Fi module 1223, the BT module 1225, the GNSS module 1227, or the NFC module 1228 may be included in a single integrated circuit (IC) or an IC package. The RF module 1229 may communicate data, e.g., communication signals (e.g., RF signals). The RF module 1229 may include, e.g., a transceiver, a power amp module (PAM), a frequency filter, a low noise amplifier (LNA), or an antenna. According to an embodiment of the present disclosure, at least one of the cellular module 1221, the Wi-Fi module 1223, the BT module 1225, the GNSS module 1227, or the NFC module 1228 may communicate RF signals through a separate RF module. The subscription identification module 1224 may include, e.g., a card including a subscriber identification module (SIM), or an embedded SIM, and may contain unique identification information (e.g., an integrated circuit card identifier (ICCID) or subscriber information (e.g., an international mobile subscriber identity (IMSI)).

The memory 1230 (e.g., the memory 1130) may include, e.g., an internal memory 1232 or an external memory 1234. The internal memory 1232 may include at least one of, e.g., a volatile memory (e.g., a dynamic random access memory (DRAM), a static RAM (SRAM), a synchronous dynamic RAM (SDRAM), etc.) or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash, or a NOR flash), a hard drive, or solid state drive (SSD). The external memory 1234 may include a flash drive, e.g., a compact flash (CF) memory, a secure digital (SD) memory, a micro-SD memory, a min-SD memory, an extreme digital (xD) memory, a multi-media card (MMC), or a memory stick™. The external memory 1234 may be functionally or physically connected with the electronic device 1201 via various interfaces.

For example, the sensor module 1240 may measure a physical quantity or detect a motion state of the electronic device 1201, and the sensor module 240 may convert the measured or detected information into an electrical signal. The sensor module 1240 may include at least one of, e.g., a gesture sensor 1240A, a gyro sensor 1240B, an atmospheric pressure sensor 1240C, a magnetic sensor 1240D, an acceleration sensor 1240E, a grip sensor 1240F, a proximity sensor 1240G, a color sensor 1240H (e.g., a red-green-blue (RGB) sensor, a bio sensor 1240I, a temperature/humidity sensor 1240J, an illumination sensor 1240K, or an ultra violet (UV) sensor 1240M. Additionally or alternatively, the sensing module 1240 may include, e.g., an e-nose sensor, an electromyography (EMG) sensor, an electroencephalogram (EEG) sensor, an electrocardiogram (ECG) sensor, an infrared (IR) sensor, an iris sensor, or a finger print sensor. The sensor module 1240 may further include a control circuit for controlling at least one or more of the sensors included in the sensing module. According to an embodiment of the present disclosure, the electronic device 1201 may further include a processor configured to control the sensor module 1240 as part of the processor 1210 or separately from the processor 1210, and the electronic device 1201 may control the sensor module 1240 while the processor 1210 is in a sleep mode.

The input unit 1250 may include, e.g., a touch panel 1252, a (digital) pen sensor 1254, a key 1256, or an ultrasonic input device 1258. The touch panel 1252 may use at least one of capacitive, resistive, infrared (IR), or ultrasonic methods. The touch panel 1252 may further include a control circuit. The touch panel 1252 may further include a tactile layer to provide an immediate reaction to the user. The (digital) pen sensor 1254 may include, e.g., part of the touch panel or a separate sheet for recognition. The key 1256 may include e.g., a physical button, optical key or key pad. The ultrasonic input device 1258 may sense an ultrasonic wave generated from an input tool through a microphone (e.g., the microphone 1288) to identify data corresponding to the sensed ultrasonic wave.

The display 1260 (e.g., the display 1160) may include a panel 1262, a hologram device 1264, a projector 1266, and/or a control circuit for controlling the same. The panel 1262 may be implemented to be flexible, transparent, or wearable. The panel 1262, together with the touch panel 1252, may be configured in one or more modules. According to an embodiment of the present disclosure, the panel 1262 may include a pressure sensor (or pose sensor) that may measure the strength of a pressure by the user's touch. The pressure sensor may be implemented in a single body with the touch panel 1252 or may be implemented in one or more sensors separate from the touch panel 1252. The hologram device 1264 may make three-dimensional (3D) images (holograms) in the air by using light interference. The projector 1266 may display an image by projecting light onto a screen. The screen may be, for example, located inside or outside of the electronic device 1201. The interface 1270 may include e.g., a high definition multimedia interface (HDMI) 1272, a USB 1274, an optical interface 1276, or a D-subminiature (D-sub) 1278. The interface 1270 may be included in e.g., the communication interface 1170 shown in FIG. 11. Additionally or alternatively, the interface 1270 may include a mobile high-definition link (MHL) interface, a secure digital (SD) card/ multimedia card (MMC) interface, or infrared data association (IrDA) standard interface.

The audio module 1280 may converting, e.g., a sound signal into an electrical signal and vice versa. At least part of the audio module 1280 may be included in e.g., the input/output interface 1145 as shown in Fig. 11. The audio module 1280 may process sound information input or output through e.g., a speaker 1282, a receiver 1284, an earphone 1286, or a microphone 1288. For example, the camera module 1291 may be a device for capturing still images and videos, and may include, according to an embodiment of the present disclosure, one or more image sensors (e.g., front and back sensors), a lens, an image signal processor (ISP), or a flash such as an LED or xenon lamp. The power management module 1295 may manage power of the electronic device 1201, for example. According to an embodiment of the present disclosure, the power management module 1295 may include a power management integrated circuit (PMIC), a charger IC, or a battery or fuel gauge. The PMIC may have a wired and/or wireless recharging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging. The battery gauge may measure an amount of remaining power of the battery 1296, a voltage, a current, or a temperature while the battery 296 is being charged. The battery 1296 may include, e.g., a rechargeable battery or a solar battery.

The indicator 1297 may indicate a particular state of the electronic device 1201 or a part (e.g., the processor 1210) of the electronic device, including e.g., a booting state, a message state, or recharging state. The motor 1298 may convert an electric signal to a mechanical vibration and may generate a vibrational or haptic effect. The electronic device 1201 may include a mobile TV supporting device (e.g., a GPU) that may process media data as per, e.g., digital multimedia broadcasting (DMB), digital video broadcasting (DVB), or mediaFlo™ standards. Each of the aforementioned components of the electronic device may include one or more parts, and a name of the part may vary with a type of the electronic device. According to various embodiments, the electronic device (e.g., the electronic device 1201) may exclude some elements or include more elements, or some of the elements may be combined into a single entity that may perform the same function as by the elements before combined.

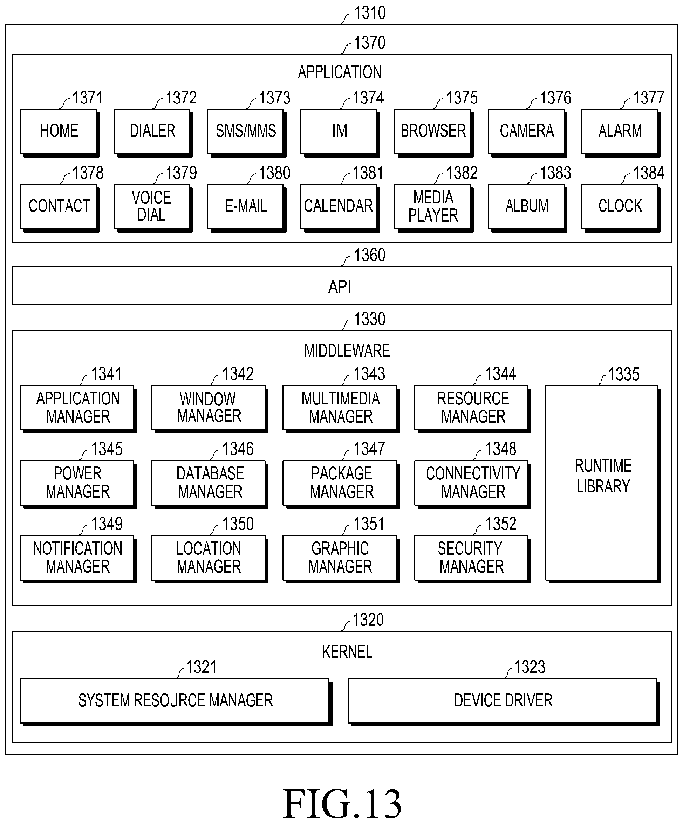

FIG. 13 is a block diagram illustrating an example of a program module configuration according to an embodiment of the present disclosure.

According to an embodiment of the present disclosure, the program module 1310 (e.g., the program 1140 shown in FIG. 11) may include an operating system (OS) controlling resources related to the electronic device (e.g., the electronic device 1101 shown in FIG. 11) and/or various applications (e.g., the application processor 1147 shown in FIG. 11) driven on the operating system. The operating system may include, e.g., Android™, iOS™, Windows™, Symbian™, Tizen™, or Bada™.

Referring to FIG. 13, the program module 1310 may include a kernel 1320 (e.g., the kernel 1141), middleware 1330 (e.g., the middleware 1143), an API 1360 (e.g., the API 1145 shown in FIG. 11), and/or an application 1370 (e.g., the application program 1147 shown in FIG. 11). At least a part of the program module 1310 may be preloaded on the electronic device or may be downloaded from an external electronic device (e.g., the electronic devices 1102 and 1104 or server 1106).

The kernel 1320 may include, e.g., a system resource manager 1321 or a device driver 1323. The system resource manager 1321 may perform control, allocation, or recovery of system resources. According to an embodiment of the present disclosure, the system resource manager 1321 may include a process managing unit, a memory managing unit, or a file system managing unit. The device driver 1323 may include, e.g., a display driver, a camera driver, a bluetooth (BT) driver, a shared memory driver, a USB driver, a keypad driver, a Wi-Fi driver, an audio driver, or an inter-process communication (IPC) driver. The middleware 1330 may provide various functions to the application 1370 through the API 1360 so that the application 1370 may use limited system resources in the electronic device or provide functions jointly required by applications 1370. According to an embodiment of the present disclosure, the middleware 1330 may include at least one of a runtime library 1335, an application manager 1341, a window manager 1342, a multimedia manager 1343, a resource manager 1344, a power manager 1345, a database manager 1346, a package manager 1347, a connectivity manager 1348, a notification manager 1349, a location manager 1350, a graphic manager 1351, or a security manager 1352.

The runtime library 1335 may include a library module used by a compiler in order to add a new function through a programming language while, e.g., the application 1370 is being executed. The runtime library 1335 may perform input/output management, memory management, or arithmetic function processing. The application manager 1341 may manage the life cycle of, e.g., the applications 1370. The window manager 1342 may manage GUI resources used on the screen. The multimedia manager 1343 may grasp formats necessary to play media files and use a codec appropriate for a format to perform encoding or decoding on media files. The resource manager 1344 may manage the source code or memory space of the application 1370. The power manager 1345 may manage, e.g., the battery capability or power and provide power information necessary for the operation of the electronic device. According to an embodiment of the present disclosure, the power manager 1345 may interwork with a basic input/output system (BIOS). The database manager 1346 may generate, search, or vary a database to be used in the applications 1370. The package manager 1347 may manage installation or update of an application that is distributed in the form of a package file.

The connectivity manager 1348 may manage, e.g., wireless connectivity. The notification manager 1349 may provide an event, e.g., arrival message, appointment, or proximity alert, to the user. The location manager 1350 may manage, e.g., locational information on the electronic device. The graphic manager 1351 may manage, e.g., graphic effects to be offered to the user and their related user interface. The security manager 1352 may provide system security or user authentication, for example. According to an embodiment of the present disclosure, the middleware 1330 may include a telephony manager for managing the voice or video call function of the electronic device or a middleware module able to form a combination of the functions of the above-described elements. According to an embodiment of the present disclosure, the middleware 1330 may provide a module specified according to the type of the operating system. The middleware 1330 may dynamically omit some existing components or add new components. The API 1360 may be a set of, e.g., API programming functions and may have different configurations depending on operating systems. For example, in the case of Android™ or iOS™, one API set may be provided per platform, and in the case of Tizen™, two or more API sets may be offered per platform.

The application 1370 may include an application that may provide, e.g., a home 1371, a dialer 1372, a short message service (SMS)/multimedia message service (MMS) 1373, an instant message (IM) 1374, a browser 1375, a camera 1376, an alarm 1377, a contact 1378, a voice dial 1379, an email 1380, a calendar 1381, a media player 1382, an album 1383, or a clock 1384, a health-care (e.g., measuring the degree of workout or blood sugar), or provision of environmental information (e.g., provision of air pressure, moisture, or temperature information). According to an embodiment of the present disclosure, the application 1370 may include an information exchanging application supporting information exchange between the electronic device and an external electronic device. Examples of the information exchange application may include, but is not limited to, a notification relay application for transferring specific information to the external electronic device, or a device management application for managing the external electronic device. For example, the notification relay application may transfer notification information generated by other application of the electronic device to the external electronic device or receive notification information from the external electronic device and provide the received notification information to the user. For example, the device management application may install, delete, or update a function (e.g., turn-on/turn-off the external electronic device (or some elements) or adjusting the brightness (or resolution) of the display) of the external electronic device communicating with the electronic device or an application operating on the external electronic device. According to an embodiment of the present disclosure, the application 1370 may include an application (e.g., a health-care application of a mobile medical device) designated according to an attribute of the external electronic device. According to an embodiment of the present disclosure, the application 1370 may include an application received from the external electronic device. At least a portion of the program module 1310 may be implemented (e.g., executed) in software, firmware, hardware (e.g., the processor 1210 shown in FIG. 12), or a combination of at least two or more thereof and may include a module, program, routine, command set, or process for performing one or more functions.

As used herein, the term "module" includes a unit configured in hardware, software, or firmware and may interchangeably be used with other terms, e.g., "logic," "logic block," "part," or "circuit." The module may be a single integral part or a minimum unit or part of performing one or more functions. The module may be implemented mechanically or electronically and may include, e.g., an application-specific integrated circuit (ASIC) chip, field-programmable gate arrays (FPGAs), or programmable logic device, that has been known or to be developed in the future as performing some operations. According to an embodiment of the present disclosure, at least a part of the device (e.g., modules or their functions) or method (e.g., operations) may be implemented as instructions stored in a computer-readable storage medium (e.g., the memory 1130), e.g., in the form of a program module. The instructions, when executed by a processor (e.g., the processor 1120), may enable the processor to carry out a corresponding function. The computer-readable medium may include, e.g., a hard disk, a floppy disc, a magnetic medium (e.g., magnetic tape), an optical recording medium (e.g., compact disc-read only memory (CD-ROM), digital versatile disc (DVD), magnetic-optical medium (e.g., floptical disk), or an embedded memory. The instruction may include a code created by a compiler or a code executable by an interpreter.

Modules or programming modules in accordance with various embodiments of the present disclosure may include at least one or more of the aforementioned components, omit some of them, or further include other additional components. Operations performed by modules, programming modules or other components in accordance with various embodiments of the present disclosure may be carried out sequentially, in parallel, repeatedly or heuristically, or at least some operations may be executed in a different order or omitted or other operations may be added.

According to an embodiment of the present disclosure, there is provided a storage medium storing commands configured to be executed by at least one processor to enable the at least one processor to perform at least one operation that includes storing playback information about content through each of a plurality of applications, displaying a list including a plurality of objects associated with the playback information about the content through each of the plurality of applications, and upon receiving an input for selecting a first object from among the plurality of objects, playing a first content item of a first application corresponding to the first object based on playback information associated with the first object.

As is apparent from the foregoing description, according to various embodiments of the present disclosure, the electronic device and method for playing multimedia content by the electronic device may provide a list of content items that have paused, allowing the playback status of multiple content items to be viewed through a single screen.

According to various embodiments of the present disclosure, the electronic device and method for playing multimedia content by the electronic device may select a particular content item through a content list and continuously play the content item from the position where playback has paused without the need for searching and choosing each application or content item.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a display device;
at least one processor electrically connected to the display device; and
a non-transitory memory electrically connected to the at least one processor, and configured to store playback information about content through each of a plurality of applications,
wherein the non-transitory memory stores instructions executed to enable the at least one processor to:
display, through the display device, a list including a plurality of objects associated with the playback information about the content through each of the plurality of applications, and
upon receiving an input for selecting a first object from among the plurality of objects, play a first content item of a first application corresponding to the first object based on playback information associated with the first object.

2. The electronic device of claim 1, wherein the playback information about the content includes at least part of information regarding a stop position between a start time, end time of a particular content item, application information, content identification information, activity information, playback start position information, playback stop position information, or information about a segment of time played back.

3. The electronic device of claim 2, wherein the instructions are configured to enable the at least one processor to,
upon receiving the input for selecting the first object, play the first content item of the first application from the stop position,
control the display device to display:
an execution screen of the first content item, the execution screen including a progress bar indicating a status of playback, and
an indicator indicating a position of playback and relocate and display the indicator corresponding to the stop position within an entire playback time of the first content item on the progress bar.

4. The electronic device of claim 1, wherein the instructions are configured to enable the at least one processor to enable the display device to:
display the list in a widget form on a home screen or a lock screen, .
display a second object for a second application on the list, and
when the second object is selected, display a list of second content items played through the second application among the plurality of objects.

5. The electronic device of claim 1, wherein the instructions are configured to enable the at least one processor to set:
an order of display of objects included in the list based on the number of content items pausing at a particular position within a playback time of content,
a communication scheme of the electronic device, or
a data consumption for playback of content.

6. The electronic device of claim 1, wherein the instructions are configured to enable the at least one processor to include and display:
at least part of a content title,
a playback status of content,
information about a position where playback pauses, or
information about an application for playing content in each of the plurality of objects.

7. The electronic device of claim 2, wherein the instructions are configured to enable the at least one processor to play the first content item from the stop position through a web browser application unless the first application is installed on the electronic device.

8. A method for playing multimedia content by an electronic device, the method comprising:
storing playback information about content through each of a plurality of applications;
displaying a list including a plurality of objects associated with the playback information about the content through each of the plurality of applications; and
upon receiving an input for selecting a first object from among the plurality of objects, playing a first content item of a first application corresponding to the first object based on playback information associated with the first object.

9. The method of claim 8, wherein the playback information about the content includes at least part of information regarding a stop position between a start time, end time of a particular content item, application information, content identification information, activity information, playback start position information, playback stop position information, or information about a segment of time played back.

10. The method of claim 9, further comprising:
upon receiving the input for selecting the first object, playing the first content item of the first application from the stop position;
displaying an execution screen of the first content item, the execution screen including a progress bar indicating a status of playback and an indicator indicating a position of playback; and
relocating and displaying the indicator corresponding to the stop position within an entire playback time of the first content item on the progress bar.

11. The method of claim 8, further comprising:
displaying the list in a widget form on a home screen or a lock screen,
displaying a second object for a second application on the list; and
when the second object is selected, displaying a list of second content items played through the second application among the plurality of objects.

12. The method of claim 8, further comprising setting:
an order of display of objects included in the list based on the number of content items pausing at a particular position within a playback time of content,
a communication scheme of the electronic device, or
a data consumption for playback of content.

13. The method of claim 8, wherein the playback information includes at least part of a content title, a playback status of content, information about a position where playback pauses, or information about an application for playing content in each of the plurality of objects.

14. The method of claim 9, further comprising:
playing the first content item from the stop position through a web browser application unless the first application is installed on the electronic device.
